Europäisches Patentamt

European Patent Office

Office européen des brevets

(11) Numéro de publication: **0 035 441**

**B1**

(12) **FASCICULE DE BREVET EUROPEEN**

(45) Date de publication du fascicule du brevet: **13.02.85**

(21) Numéro de dépôt: **81400288.7**

(22) Date de dépôt: **24.02.81**

(51) Int. Cl.⁴: **G 01 S 1/50,** G 01 S 1/40, H 01 Q 3/24

(54) **Dispositif d'alimentation d'un système de radionavigation du type VOR Doppler et son utilisation.**

(30) Priorité: **05.03.80 FR 8004950**

(43) Date de publication de la demande: **09.09.81 Bulletin 81/36**

(45) Mention de la délivrance du brevet: **13.02.85 Bulletin 85/07**

(84) Etats contractants désignés: **CH DE GB IT LI NL**

(56) Documents cités: **FR-A-2 347 821** **US-A-3 896 444**

**PHILIPS TELECOMMUNICATION REVIEW, vol. 34, no. 1, avril 1976 HILVERSUM (NL) VAN DEN BERG: "The Philips Doppler VOR Beacon RN 200", pages 1-10**

Le dossier contient des informations techniques présentées postérieurement au dépôt de la demande et ne figurant pas dans le présent fascicule.

(73) Titulaire: **THOMSON-CSF** **173, Boulevard Haussmann** **F-75379 Paris Cedex 08 (FR)**

(72) Inventeur: **Becavin, Henri** **THOMSON-CSF SCPI 173, bld Haussmann** **F-75360 Paris Cedex 08 (FR)** Inventeur: **Grousseau, Alain** **THOMSON-CSF SCPI 173, bld Haussmann** **F-75360 Paris Cedex 08 (FR)**

(74) Mandataire: **Benoit, Monique et al** **THOMSON-CSF SCPI 173, Bld Haussmann** **F-75379 Paris Cedex 08 (FR)**

Courier Press, Leamington Spa, England.

### Description

La présente invention concerne un dispositif d'alimentation d'un système de radionavigation du type VOR Doppler.

Un système VOR, c'est-à-dire une radiobalise omnidirectionnelle très haute fréquence, permet de fournir à chaque aéronef équipé d'un récepteur approprié une information de relèvement par rapport à cette balise au sol dont la position géographique est connue. L'accroissement du trafic aérien, tant national qu'international, et du nombre des routes aériennes impose à chaque pays d'avoir une couverture radioélectrique aussi sûre et fiable que possible. Cette couverture est en partie assurée par les systèmes VOR qui jalonnent les routes aériennes.

Le VOR rayonnant un signal dans la bande métrique, soit 108—118 MHz, la qualité de ce signal est très largement tributaire du site sur lequel le VOR est installé. En effet, le rayonnement omnidirectionnel réfléchi par des obstacles génère des erreurs telles qu'elles peuvent rendre le système inutilisable. C'est pourquoi, dans les sites accidentés, on remplace le VOR conventionnel par le VOR Doppler, dont les principes vont être exposés dans la suite.

Le principe général du système VOR fait correspondre à l'angle d'azimut $\theta$ de l'aéronef par rapport au nord magnétique du site de l'émetteur au sol, la différence de phase existant entre deux signaux sinusoïdaux à la fréquence 30 Hz qui modulent une fréquence porteuse très haute fréquence. Pour cela, les antennes constituant le système VOR rayonnent une onde porteuse très haute fréquence VHF modulée en amplitude d'une part par une première onde sinusoïdale basse fréquence de fréquence 30 Hz et d'autre part par une deuxième onde basse fréquence de fréquence 9960 Hz, ellemême modulée en fréquence par un signal sinusoïdal de fréquence 30 Hz.

Un système VOR conventionnel rayonne deux signaux:

— un signal de "référence", rayonné omnidirectionnellement, constitué par une porteuse VHF modulée en amplitude par une sousporteuse à 9960 Hz, elle-même modulée en fréquence par un signal sinusoïdal 30 Hz,

— un signal "variable" rayonné suivant un diagramme en huit tournant à 30 tours par seconde et dont l'enveloppe BF des bandes latérales a une phase caractéristique de l'azimut.

Ces deux signaux se combinent dans l'espace pour donner le signal VOR complet.

Par contre, dans un système VOR Doppler, le mode de transmission des informations Référence et Variable est inversé par rapport au VOR conventionnel. Ainsi, le signal 30 Hz de Référence est transmis omnidirectionnellement par modulation d'amplitude de l'onde VHF, et l'information d'azimut est transmise par modulation de fréquence à 30 Hz des deux bandes latérales à $\pm9960$ Hz de l'onde porteuse. Ces deux bandes latérales sont émises indépendamment l'une de l'autre par des circuits distincts. Le diagramme omnidirectionnel transmettant l'information de référence est rayonné par l'antenne centrale alors que l'autre diagramme contenant l'information d'azimut est obtenu en faisant tourner sur un cercle de périmètre égal à l'indice de modulation $K_o$, en longueurs d'onde à la fréquence de fonctionnement, deux antennes diamétralement opposées et alimentées chacune par une des bandes latérales à $\pm9960$ Hz de la fréquence porteuse. La fréquence de rotation de ces antennes est 30 Hz. Ainsi le signal VOR émis dans une direction $\theta$ est de la forme:

$$S = \cos \omega [1 + m \cos \Omega t + K_o \cos (\Omega_o t - \theta)]$$

avec, suivant les normes de l'Organisation de l'Aviation Civile Internationale (OACI):

$\omega = 2\pi F$, F étant la fréquence porteuse VHF,
$\Omega_o = 2\pi f_o = 2\pi/T_o$, $f_o$ étant la fréquence de rotation des antennes sur la cercle ($f_o$ 30 Hz),
$\Omega = 2\pi f$, f étant la fréquence sous-porteuse des deux bandes latérales$\pm9960$ Hz,
$K_o$ en radians étant le périmètre du cercle ($K_o = 16\lambda$ soit environ 42m à la fréquence utilisée)
$\theta =$ azimut du récepteur.

Pour des raisons pratiques, la rotation mécanique de ces antennes émettant les deux bandes latérales est impossible, par conséquent elle est simulée par la commutation d'un réseau circulaire d'antennes fixes, suivant une fonction de temps appropriée du manière à simuler le mouvement progressif du point d'émission d'une antenne à l'autre.

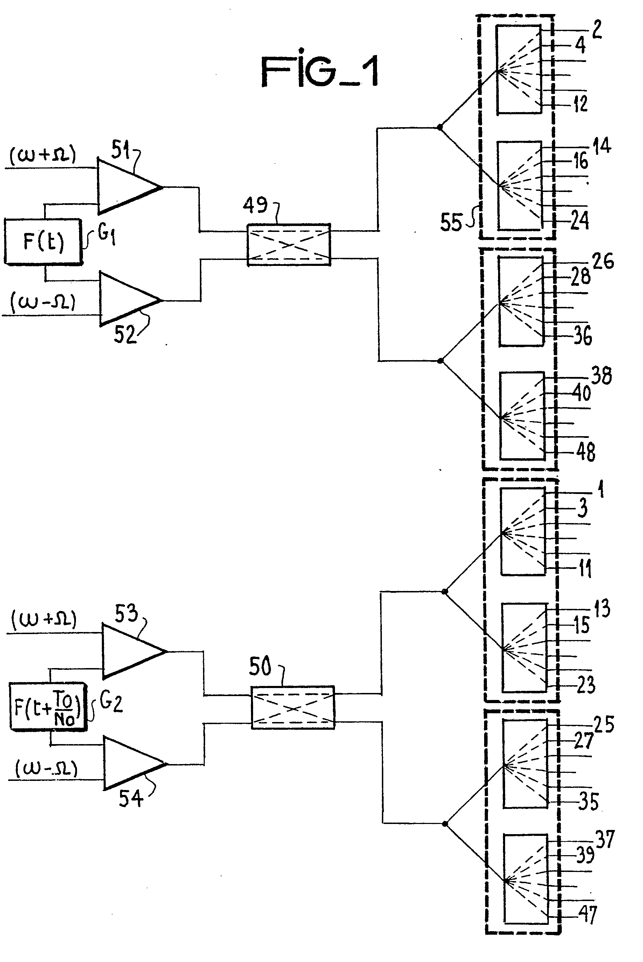

Plusieurs solutions pour l'émission des deux bandes latérales de la modulation d'amplitude de l'onde porteuse VHF existent à l'heure actuelle; notamment l'émission d'une seule bande latérale ou des deux bandes alternativement, mais on retiendra plutôt une troisième solution qui consiste à émettre les deux bandes latérales simultanément sur deux antennes ou deux groupes d'antennes diamétralement opposées. La Figure 1 représente une réalisation actuelle d'un dispositif d'alimentation du réseau circulaire d'antennes comportant un nombre $N_o$ pair d'antennes ($N_o = 48$ sur la figure) permettant précisément l'émission simultanée des deux bandes latérales sur quatre antennes. Ces quatre antennes sont réparties en deux groupes diamétralement opposés de deux antennes adjacentes.

Le dispositif d'alimentation comprend deux inverseurs 49 et 50. Les deux entrées de l'inverseur 49 sont alimentées au moyen de deux amplificateurs-modulateurs 51 et 52, respectivement par les bandes latérales supérieure $(\omega+\Omega)$ et inférieure $(\omega-\Omega)$, chacune d'elles étant modulée en amplitude par une tension F(t) périodique HF, (G1) de période $2T_o/N_o$, dont la forme peut être par exemple en arches de sinusoïde. L'inverseur 50 est alimenté au moyen de deux amplificateurs-modulateurs 53 et 54, semblablement par la même tension mais décalée dans le temps de

$$T_o/N_o \text{ (G2), avec } T_o = \frac{1}{f_o} = \frac{1}{30 \text{ Hz}}$$

($T_o$: période de rotation des deux antennes idéales du système VOR Doppler). Les deux inverseurs 49 et 50 sont reliés à quatre commutateurs 55 à une entrée et $N_o/4$ sorties, permettant l'alimentation des antennes référencées de 1 à 48. De cette façon à un instant donné, la bande latérale supérieure $(\omega+\Omega)$ alimente deux antennes adjacentes (1 et 2 par exemple) tandis que la bande latérale inférieure $(\omega-\Omega)$ alimente les deux antennes diamétralement opposées aux deux premières

$$(\frac{N_o}{2}+1 \text{ et } \frac{N_o}{2}+2 \text{ soit 25 et 26 dans le cas N=48.}).$$

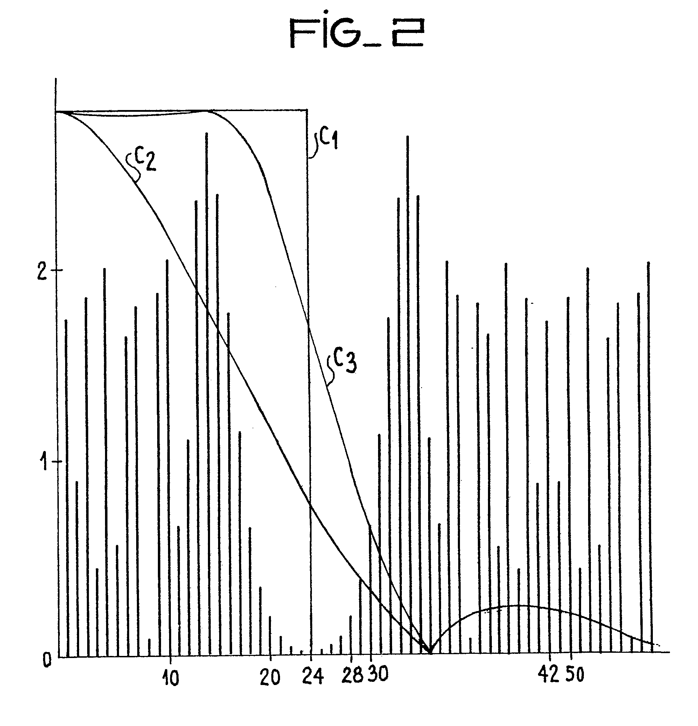

Mais cette simulation du déplacement continu idéal des antennes présente maints inconvénients. Tout d'abord, on constate que le spectre du signal émis par l'ensemble des antennes du réseau circulaire a l'allure représentée sur la Figure 2, dans l'hypothèse d'une alimentation de chaque antenne par une impulsion rectangulaire de durée infiniment courte. Le spectre présente un effet de repliement avec une périodicité égale au nombre $N_o$ d'antennes du réseau; toutes les raies dont le rang est supérieur à 20 sont parasites. C'est pourquoi il faudrait réaliser une alimentation de chaque antenne par une tension HF modulée telle que l'enveloppe de son spectre soit de forme rectangulaire jusqu'à la raie de rang N=20, comme le montre la courbe $C_1$; la courbe $C_2$ représente l'enveloppe du spectre obtenue quand la tension est en forme d'arche de sinusoïde. Pour cela une telle tension devrait s'écrire:

$$F(t) = \frac{1}{N} \sum_{n=0}^{n=N} \cos n\Omega_o t = \frac{\sin N\Omega_o t}{N \sin \Omega_o t}$$

Ainsi, on obtiendrait un signal global rayonné conforme à celui d'une modulation de fréquence pure d'indice $K_o=16$ par un signal sinusoïdal, sans modulation d'amplitude et de phase parasite. Mais une telle tension implique l'alimentation simultanée de toutes les antennes du réseau circulaire, contrairement aux réalisations actuelles.

Un second inconvénient du réseau circulaire d'antenne simulant la rotation idéale provient précisément du nombre élevé d'antennes et de leur proximité, entraînant un couplage parasite entre elles. En effet, l'expérience montre que le rayonnement d'une antenne influe sur celui des autres, de telle sorte que le diagramme d'amplitude et de phase de chaque antenne s'écarte sensiblement de l'omnidirectionnalité (de l'ordre de 10 dB en amplitude et de 50° en phase). De plus on constate que le système VOR Doppler à deux bandes latérales simultanées (DSB) présente des modulations de phase et d'amplitude parasites importantes des signaux émis par l'antenne centrale dues à la commutation des antennes du réseau circulaire.

Les effets dus au spectre non idéal des signaux rayonnés s'ajoutant à ceux des couplages parasites conduisent à une dégradation des performances du système VOR Doppler de l'art antérieur.

Selon une caractéristique de l'invention, le dispositif d'alimentation d'un système de radionavigation du type VOR Doppler, système rayonnant d'une part omnidirectionnellement une onde porteuse VHF modulée en amplitude et d'autre par les deux bandes latérales d'une modulation d'amplitude de cette onde VHF, ces deux bandes latérales étant modulées en amplitude par une tension périodique F(t) et un dispositif de commutation des $N_o$ antennes du réseau circulaire rayonnant les bandes latérales, est tel qu'il comporte des moyens de couplage et des moyens d'addition des bandes latérales modulées en amplitude, permettant ainsi la réalisation d'un signal d'alimentation des antennes à spectre déterminé et la compensation des couplages existant entre ces antennes.

Selon une autre caractéristique de l'invention, le dispositif d'alimentation comporte des moyens de couplage et d'addition des bandes latérales modulées en amplitude placés en amont du dispositif de commutation des antennes.

Selon une autre caractéristique de l'invention, ces moyens de couplage et d'addition sont placés entre le dispositif de commutation et les $N_o$ antennes du réseau circulaire émettant les bandes latérales de l'onde VHF.

D'autres caractéristiques et avantages de l'invention apparaîtront dans la description qui suit, illustrée par les figures suivantes qui, outre:

— la figure 1, montrant un exemple de réalisation d'un dispositif d'alimentation du réseau circulaire d'antennes, suivant l'art antérieur;
— et la figure 2, montrant le spectre du signal émis par le réseau d'antennes, quand celles-ci sont alimentées chacune par une impulsion infiniment brève;

représentent des exemples de réalisation non limitatifs:

— les figures 3 et 5, les schémas de deux réalisations différentes d'un dispositif d'alimentation suivant l'invention;

— la figure 4, les différents signaux produits par les circuits du dispositif d'alimentation de la figure 3 suivant l'invention;

— la figure 6, un autre type de réalisation d'un dispositif d'alimentation du réseau d'antennes suivant l'invention.

Les éléments portant les mêmes références dans les différentes figures sont identiques et assurent les mêmes fonctions, auquel cas ils ne seront décrits qu'une fois.

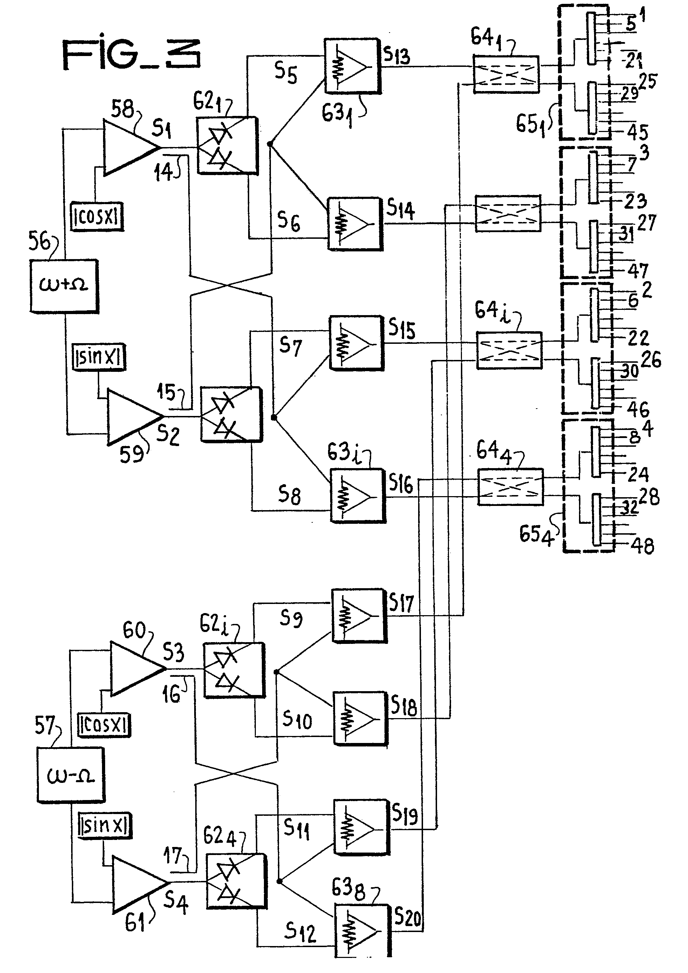

La figure 3 représente le schéma d'un type de réalisation d'un dispositif d'alimentation d'un système VOR, selon l'invention. Les deux bandes latérales supérieure $(\omega+\Omega)$ et inférieure $(\omega-\Omega)$ sont délivrées respectivement par deux générateurs 56 et 57, puis modulées, au moyen d'amplificateurs-modulateurs 58 à 61, par une tension HF périodique, semblable à la tension F(t) décrite dans la figure 1. Ici, F(t) est de la forme cos X, avec $0<X<\pi/2$ et $F(t+T_o/N_o)$ est de la forme sin X, avec $0<X<\pi/2$. Les signaux $S_1$ à $S_4$, délivrés par les amplificateurs-modulateurs 58 à 61, passent chacun à travers un commutateur à diodes $61_i$-i variant de 1 à 4—sélectionnant une arche sur deux des signaux $S_1$ à $S_4$ De tels commutateurs sout connus de l'étrat de la technique. Les signaux $S_5$ à $S_{12}$ issus de ces commutateurs sont additionnés dans huit circuits additionneurs $63_i$-i variant de 1 à 8- à une partie des signaux $S_1$ à $S_4$ prélevée par quatre coupleurs 14 à 17. En sortie des quatre circuits $63_1$ à $63_4$, on obtient un signal périodique d'alimentation des antennes, correspondant à la bande latérale supérieure $(\omega+\Omega)$, de période $4T_o/N_o$, mais décalé dans le temps de $T_o/N_o$ à chaque sortie des circuits $63_1$ à $63_4$. De même, en sortie des quatre circuits $63_5$ à $63_8$, on obtient un signal d'alimentation correspondant à la bande latérale inférieure $(\omega-\Omega)$, semblable au précédent. Quatre circuits inverseurs $64_i$-i variant de 1 à 4- reçoivent chacun en entrée les deux signaux d'alimentation correspondant l'un à la bande latérale supérieure et l'autre à la bande latérale inférieure, issus respectivement des circuits $63_1$ et $63_5$, $63_2$ et $63_6$, $63_3$ et $63_7$, et $63_3$ et $63_8$. Leurs sorties sont reliées à quatre commutateurs $65_i$-i variant de 1 à 4-, identiques à ceux décrits pour la figure 1, comportant chacun deux entrées et douze sorties sur les antennes.

Grâce à ce dispositif d'alimentation des antennes, les signaux alimentant les commutateurs $65_i$ représentent bien les deux bandes latérales modulées par une tension HF dont le spectre se rapproche d'un spectre rectangulaire, représenté par la courbe $C_3$ de la figure 2; le rayonnement de l'ensemble des antennes du réseau circulaire se rapproche ainsi de celui d'une modulation de fréquence pure d'indice $K_o=16$.

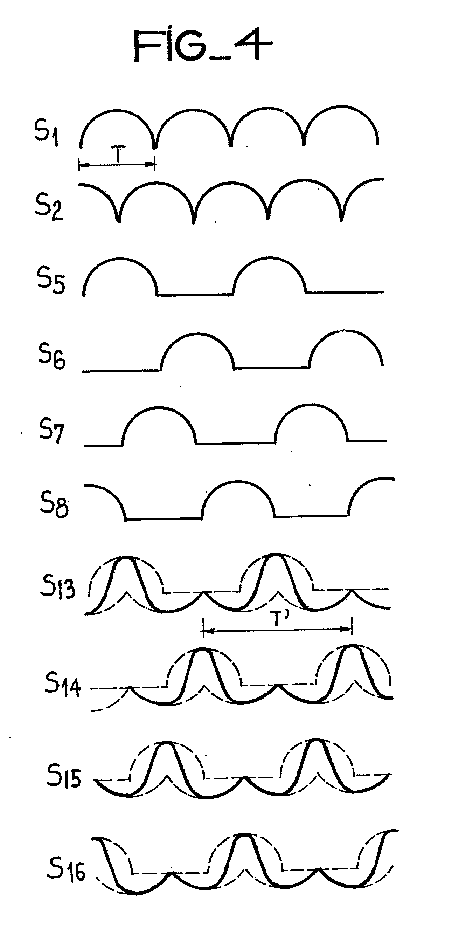

Sur la figure 4 sont représentées les enveloppes des signaux $S_1$ et $S_2$, qui sont les mêmes que celles des signaux $S_3$ et $S_4$; celles des signaux $S_5$ à $S_8$ identiques à celles des signaux $S_9$ à $S_{12}$. Sont également représentées les enveloppes des signaux $S_{13}$ à $S_{16}$ issus des circuits additionneurs $63_1$ à $63_4$, enveloppes semblables à celles des signaux $S_{17}$ à $S_{20}$, qui représentent eux la bande latérale inférieure. On peut constater que la période T' des signaux $S_{13}$ à $S_{16}$ est le double de celle T des signaux F(t) et $F(t+T_o/N_o)$. Chaque antenne du réseau circulaire émettant les deux bandes latérales $\omega\pm\Omega$ de l'onde porteuse VHF est ainsi alimentée pendant un temps deux fois plus long que dans les réalisations antérieures.

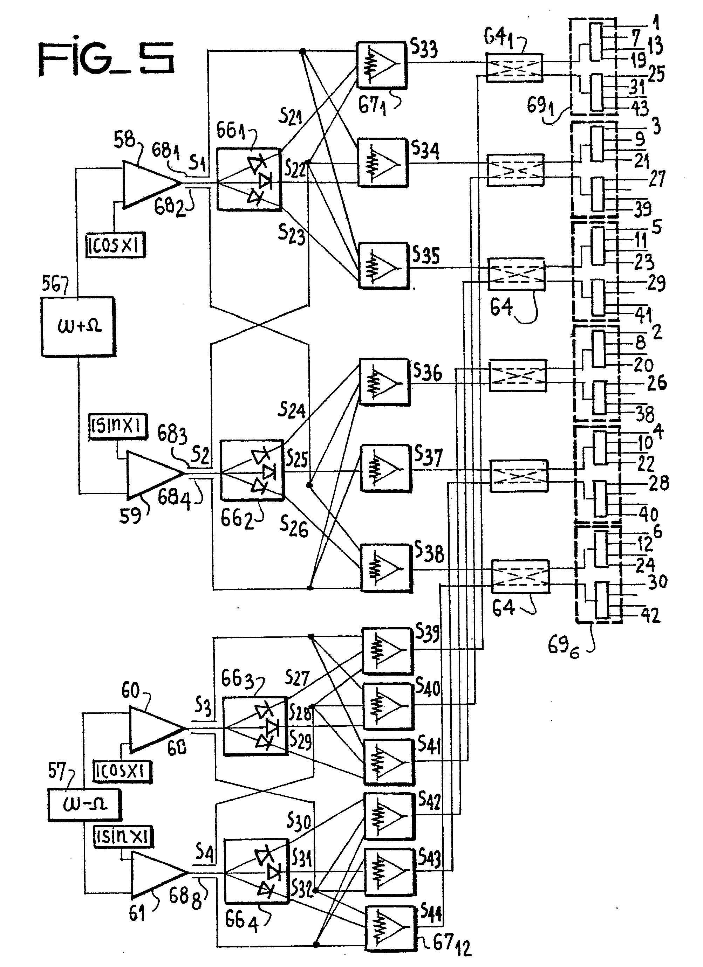

On peut encore améliorer l'allure du spectre du signal émis par le réseau d'antennes en accroissant les moyens de couplage et de mélange des différents signaux modulés, chaque antenne devenant alors alimentée pendant un durée T" trois fois plus grande que la durée T antérieure. La figure 5 représente le dispositif d'alimentation entraînant le triplement de la durée d'alimentation des antennes. Comme le dispositif de la figure 3, il comporte deux générateurs 56 et 57 des bandes latérales $(\omega+\Omega)$ et $(\omega-\Omega)$ et quatre amplificateurs-modulateurs 58 à 61 modulant les bandes latérales par une tension HF. Les signaux $S_1$ à $S_4$ issus de ces amplificateurs-modulateurs passent chacun dans un commutateur à diodes $66_i$-i variant de 1 à 4- sélectionnant une arche sur trois de ces signaux. Le signaux $S_{21}$ à $S_{32}$ issus de ces commutateurs somnt additionnés dans douze circuits additionneurs $67_i$-i variant de 1 à 12- à une partie des signaux $S_1$ à $S_4$ prélevée par huit coupleurs $68_i$-i variant de 1 à 8-. Ainsi, par exemple, les signaux $S_{21}$, $S_{22}$ et $S_{23}$ issus du commutateur $66_1$ sont additionnés chacun d'une part à une partie du signal $S_1$ prélevée par le coupleur $68_1$ et d'autre part à une partie du signal $S_2$ prélevée par le coupleur $68_3$. De même, les signaux $S_{24}$, $S_{25}$ et $S_{26}$ issus du commutateur $66_2$ sont additionnés d'une part à une partie du signal $S_1$ prélevée par le coupleur $68_2$ et d'autre part à une partie du signal $S_2$ prélevée par le coupleur $68_4$. Les signaux $S_{33}$ à $S_{38}$ d'alimentation des antennes, en sortie des circuits $67_1$ à $67_6$, correspondant à la bande latérale supérieure $(\omega+\Omega)$, sont périodiques de période $6T_o/N_o$, mais décalés dans le temps de $T_o/N_o$ à chaque sortie des circuits $67_1$ à $67_6$. De même pour les signaux $S_{39}$ à $S_{44}$ correspondant à la bande latérale $(\omega-\Omega)$. Six circuits inverseurs $64_i$-i variant de 1 à 6- reçoivent respectivement les signaux $S_{33}$ et $S_{39}$, $S_{34}$ et $S_{40}$, $S_{35}$ et $S_{41}$, $S_{36}$ et $S_{42}$, $S_{37}$ et $S_{43}$ et $S_{38}$ et $S_{44}$ et alimentent six commutateurs $69_1$ à $69_6$ reliés eux-mêmes aux antennes du réseau circulaire.

Comme il a été dit précédemment, le nombre élevée et la proximité des antennes entraînent des effets de couplage parasite. Pour cela, les niveaux des signaux $S_1$ et $S_2$ prélevés par les coupleurs, dans les figures 3 et 5, doivent tenir compte de ces couplages, dont l'influence la plus néfaste n'est pas due aux antennes voisines mais aux antennes plus éloignées, en raison du plus grand écart entre les centres de phase des antennes.

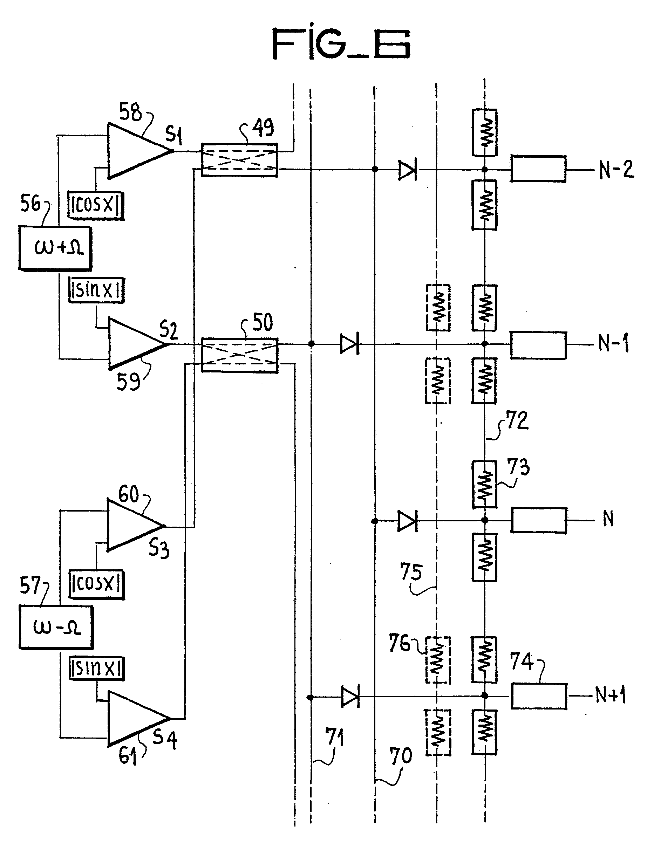

Une meilleure compensation des couplages est obtenue grâce au dispositif d'alimentation représenté sur la figure 6. Les signaux $S_1$ à $S_4$ sont obtenus comme dans la figure 1, représentant le dispositif d'alimentation de l'art antérieur, où les deux inverseurs 49 et 50 sont reliés à quatre commutateurs dont deux seulement 70 et 71 sont représentés. Les commutateurs 70 et 71 sont alimentés par les deux signaux de l'art antérieur

$$F(t) . \cos(\omega+\Omega)t \text{ et } F(t+T_o/N_o) \cos (\omega+\Omega)t$$

représentant les tensions d'alimentation des antennes paires et impaires. A la sortie de ces commutateurs, on a disposé des lignes de laison 72 et des éléments de couplage 73 reliant entre elles les antennes de rangs successifs. En considérant l'évolution au cours du temps du signal émis par l'antenne N, on voit qu'une fraction de l'énergie émise par l'antenne N-2 sera émise au même instant, avec une amplitude et une phase déterminée par les éléments de couplage 72 et 73. Ensuite, pendant le temps d'alimentation de l'antenne N-1, une fraction de son énergie sera émise par l'antenne N.

De cette façon on voit que, pour une antenne, on obtient un signal d'émission analogue au signal obtenu par les réalisations décrites dans les figures précédentes, bien que l'approximation soit nécessairement moins bonne. Pour améliorer ce dispositif, on peut d'une part placer un élément 74 entre les lignes de liaison et l'entrée de chaque antenne, optimisant ainsi l'impédance de charge des antennes compte tenu de l'impédance ramenée par les lignes 72 et les éléments 73, et d'autre part, ajouter des lignes supplémentaires 75 et des éléments de couplage 76, reliant une antenne sur deux, de manière à mineux définir les signaux provenant des antennes plus éloignées.

Dans un exemple de réalisation non limitatif, les éléments 74 sont de simples transformateurs de rapport 2 et les éléments de couplage 73 sont des résistances série.

On a ainsi décrit un dispositif d'alimentation d'un système VOR Doppler, dont les performances sont nettement améliorées par rapport à celles de l'art antérieur. Grâce à ce nouveau dispositif, les modulations parasites de phase et d'amplitude de l'onde porteuse émise par l'antenne centrale, comme des deux bandes latérales émises par le réseau circulaire d'antennes sont considérablement réduites.

**Revendications**

1. Dispositif d'alimentation d'un système de radionavigation du type VOR Doppler comprenant notamment un réseau circulaire de $N_o$ antennes (1 à 48) rayonnant les deux bandes latérales, de pulsations respectives $(\omega+\Omega)$ et $(\omega-\Omega)$, d'une modulation d'amplitude d'une onde porteuse VHF de pulsation, comportant:

— des moyens générant les bandes latérales, constitués pour chacune d'elles par un générateur (56; 57) et deux amplificateurs-modulateurs (58 et 59; 60 et 61) modulant en amplitude le signal issu du générateur (56; 57) par une tension périodique F(t) et délivrant respectivement les signaux ($\bar{S}_1$ et $S_2$; $S_3$ et $S_4$), et
— un dispositif de commutation ($65_1$ à $65_4$) des $N_o$ antennes (1 à 48) du réseau circulaire rayonnant les bandes latérales, caractérisé en ce qu'il comporte de plus, pour chacune des bandes latérales:
— deux moyens de prélevement 14 et 15; 16 et 17) d'une partie des signaux respectifs ($S_1$ et $S_2$; $S_3$ et $S_4$) issus des deux amplificateurs-modulateurs (58 et 59; 60 et 61); et
— des moyens d'addition des signaux ($S_1$ et $S_2$) respectivement ($S_3$ et $S_4$) correspondant à la bande latérale de pulsation respective $(\omega+\Omega)$; $(\omega-\Omega)$, produisant un signal d'alimentation des antennes à spectre déterminé et compensant les couplages existant entre ces antennes.

2. Dispositif d'alimentation selon la revendication 1, caractérisé en ce que les moyens de prélèvement d'une partie des signaux ($S_1$ à $S_4$) et les moyens d'addition ($63_l$) des bandes latérales modulées en amplitude sont placés en amont du dispositif de commutation ($65_l$) des antennes.

3. Dispositif d'alimentation selon la revendication 1, caractérisé en ce que les moyens de prélèvement (73—76) et les moyens d'addition des bandes latérales modulées en amplitude sont placés entre le dispositif de commutation (70—71) et les $N_o$ antennes du réseau circulaire.

4. Dispositif d'alimentation selon la revendication 1 ou 2, caractérisé en ce que pour chacune des deux bandes latérales de pulsations respectives $(\omega+\Omega)$ et $(\omega-\Omega)$:

— les moyens de prélévement sont constitués par deux coupleurs 14 et 15; 16 et 17), et
— les moyens d'addition des signaux ($S_1$ et $S_2$; $S_3$ et $S_4$) sont constitués par deux commutateurs ($62_1$ et $62_2$; $62_3$ et $62_4$), reliés chacun à un des deux amplificateurs-modulateurs et prélevant une période sur deux des signaux ($S_1$ et $S_2$; $S_3$ et $S_4$) respectivement et délivrant quatre signaux ($S_5$ à $S_8$; $S_9$ à $S_{12}$), et par quatre additionneurs ($63_1$ à $63_4$; $63_5$ à $63_8$) comportant chacun deux entrées, une première entrée reliée à une sortie d'un des deux commutateurs et une deuxième entrée reliée au coupleur qui est connecté à l'autre commutateur, les signaux de sortie des additionneurs correspondant aux deux bandes latérales alimentant le dispositif de

commutation ($65_i$) des $N_o$ antennes du réseau.

5. Dispositif d'alimentation selon la revendication 1 ou 2, caractérisé en ce que pour chacune des deux bandes latérales de pulsations respectives ($\omega+\Omega$) et ($\omega-\Omega$):

— les moyens de prélèvement sont constitués par quatre coupleurs ($68_1$ à $68_4$; $68_5$ à $68_8$) et

— les moyens d'addition sont constitués par deux commutateurs ($66_1$ et $66_2$; $66_3$ et $66_4$), reliés chacun à un des deux amplificateurs-modulateurs, prélevant une période sur trois des signaux ($S_1$ et $S_2$; $S_3$ et $S_4$) respectivement et délivrant six signaux ($S_{21}$ à $S_{26}$; $S_{27}$ à $S_{32}$), et par six additionneurs ($67_1$ à $67_6$; $67_7$ à $67_{12}$) comportant chacun trois entrées, une première entrée reliée à une sortie d'un des deux commutateurs, une deuxième entrée reliée à un des coupleurs connectés à ce commutateur et une troisième entrée reliée à un des coupleurs connectés à l'autre commutateur, les signaux de sortie des additionneurs correspondant aux deux bandes latérales alimentant le dispositif de commutation ($69_i$) des $N_o$ antennes du réseau.

6. Dispositif d'alimentation selon la revendication 3, caractérisé en ce que, en sortie du dispositif de commutation (70—71 figure 6) sont disposées des lignes de liaison (72) et des éléments de couplage (73) reliant entre elles les antennes de rangs successifs du réseau circulaire rayonnant les bandes latérales de la modulation d'amplitude de l'onde porteuse VHF.

7. Dispositif d'alimentation selon la revendication 6, caractérisé en ce qu'il comporte, entre les lignes de liaison et chaque antenne, un élément (74) optimisant l'impédance de charge des antennes compte tenu de l'impédance ramenée par les lignes (72) et les éléments (73).

8. Dispositif d'alimentation selon la revendication 7, caractérisé en ce que des lignes de liaison (75) et des éléments de couplage (76) supplémentaires relient entre elles les antennes de rang différent de deux unités.

9. Dispositif d'alimentation selon les revendications 7 ou 8, caractérisé en ce que les éléments de couplage (73 ou 76) sont des résistances série et les éléments (74) des transformateurs de rapport deux.

10. Utilisation d'un dispositif d'alimentation suivant l'une des revendications 1 à 9 dans un système VOR Doppler.

**Patentansprüche**

1. Speise-Vorrichtung eines Radionavigationssystems der Art VOR-Doppler, welches insbesondere ein Kreisnetz von $N_o$ Antennen (1 bis 48) beinhaltet, welches die beiden Seitenbänder der jeweiligen Pulsationen ($\omega+\Omega$) und ($\omega-\Omega$) einer Amplitudenmodulation einer VHF-Trägerwelle der Pulsation $\omega$ ausstrahlt, die folgendes aufweist:

— Erzeugungsmitteln der Seitenbänder, welche für jede derselben aus einem Generator (56, 57) und zwei Verstärker-Modulatoren (58 und 59; 60 und 61) bestehen, die die Amplitude des vom Generator (56, 57) kommenden Signals durch eine periodische Spannung F(t) moduliert und jeweils die Signale ($S_1$ und $S_2$; $S_3$ und $S_4$) liefert und

— eine Kommutations-Vorrichtung ($65_1$ bis $65_4$) der $N_o$ die Seitenbänder ausstrahlenden Kreisnetzantennen (1 bis 48), dadurch gekennzeichnet, dass sie, für jedes Seitenband, weiter foldendes aufweist:

— zwei Entnahme-Mitteln (14 und 15; 16 und 17) eines Teils der jeweiligen Signale ($S_1$ und $S_2$; $S_3$ und $S_4$), die von den Verstärker-Modulatoren (58 und 59; 60 und 61) kommen; und

— Addierungs-Mitteln der Signale ($S_1$ und $S_2$) bzw. ($S_2$ und $S_4$) die dem Seitenband der jeweiligen Pulsation ($\omega+\Omega$); ($\omega-\Omega$) entspricht, welche Antennen-Speisungs-Signale mit bestimmten Spektrum erzeugen und die zwischen den Antennen bestehenden Kopplungen kompensieren.

2. Speise-Vorrichtung nach Anspruch 1, dadurch gekennzeichnet, dass die Entnahme-Mitteln eines Teils der Signale ($S_1$ bis $S_4$) und die Addierungs-Mitteln ($63_i$) der im Amplitude-modulierten Seitenbänder der Antennen-Kommutations-Vorrichtung ($65_i$) vorgeschaltet sind.

3. Speise-Vorrichtung nach Anspruch 1, dadurch gekennzeichnet, dass die Entnahme-Mitteln (73—76) und die Addierungs-Mitteln der Amplituden-modulierten Seitenbänder zwischen der Kommutations-Vorrichtung (70—71) und den $N_o$ Antennen des Kreisnetzes angeordnet sind.

4. Speise-Vorrichtung nach Anspruch 1 oder 2, dadurch gekennzeichnet, dass für jedes der Seitenbänder mit jeweiligen Pulsationen ($\omega+\Omega$) und ($\omega-\Omega$):

— die Entnahme-Mitteln aus zwei Kopplern (14 und 15; 16 und 17) bestehen und

— die Addierungs-Mitteln der Signale ($S_1$ und $S_2$; $S_3$ und $S_4$) aus zwei Kommutatoren ($62_1$ und $62_2$; $62_3$ und $62_4$) bestehen, die jeder mit einem der beiden Verstärker-Modulatoren verbunden sind und jeweils eine von zwei Perioden der Signale ($S_1$ und $S_2$; $S_3$ und $S_4$) entnehmen und vier Signale ($S_5$ bis $S_8$; $S_9$ bis $S_{12}$) liefern und aus vier Addierern ($63_1$ bis $63_4$; $63_5$ bis $63_8$), die zwei Eingänge aufweisen, einen ersten mit einem Ausgang eines der beiden Kommutatoren verbundenen Eingang und einen zweiten Eingang, der mit dem Koppler verbunden ist, der an den anderen Kommutator angeschlossen ist, wobei die den beiden Seitenbändern entsprechenden Ausganssignale der Addierer die Kommutations-Vorrichtung ($65_i$) der $N_o$ Antennen des Kreisnetzes speisen.

5. Speise-Vorrichtung nach Anspruch 1 oder 2, dadurch gekennzeichnet, dass für jedes der zwei Seitenbänder der jeweiligen Pulsation $(\omega+\Omega)$; $(\omega-\Omega)$:

— die Entnahme-Mitteln aus vier Kopplern ($68_1$ bis $68_4$; $68_5$ bis $68_8$) bestehen und
— die Addierungs-Mitteln aus zwei Kommutatoren ($66_1$ und $66_2$; $66_3$ und $66_4$) bestehen, die jeder mit einen der beiden Verstärker-Modulatoren verbunden sind, und die jeweils eine von drei Perioden der Signale ($S_1$ und $S_2$; $S_3$ und $S_4$) entnehmen und sechs Signale ($S_{21}$ bis $S_{26}$; $S_{27}$ bis $S_{32}$) liefern und aus sechs Addierern ($67_1$ bis $67_6$; $67_7$ bis $67_{12}$), die jeder drei Eingänge aufweisen, einen ersten mit einem der Ausgänge eines der beiden Kommutatoren verbundenen Eingang, einen zweiten Eingang, der mit einem an diesen Kommutator angeschlossenen Koppler und einen dritten Eingang, der mit einem an den anderen Kommutator angeschlossenen Koppler verbunden ist, wobei die den beiden Seitenbändern entsprechenden Ausgangssignale der Addierer die Kommutations-Vorrichtung ($69_i$) der $N_o$ Antennen des Kreisnetzes speisen.

6. Speise-Vorrichtung nach Anspruch 3, dadurch gekennzeichnet, dass am Ausgang der Kommutations-Vorrichtung (70—71 Figur 6) Verbindungs-Leitungen (72) und Koppelelemente (73), die die Seitenbänder der Amplituden-Modulation der VHF-Trägerwelle ausstrahlt welche die mit aufeinanderfolgender Ordnung Antennen des Kreis-Netzes miteinander verbinden, angeordnet ist.

7. Speisevorrichtung nach Anspruch 6, dadurch gekennzeichnet, dass sie zwischen den Verbindungsleitungen und jeder Antenne ein Element (74) aufweist, das die Last-Impedanz der Antennen optimiert, wobei die von den Leitungen (72) und die Elemente (73) hinzugebrachte Impedanz berück-stichtigt wird.

8. Speisevorrichtung nach Anspruch 7, dadurch gekennzeichnet, dass zusätzliche Verbindungsleitungen (75) und Koppelelemente (76) die Antennen untereinander verbinden, deren Ordnungen sich um zwei Einheiten unterscheiden.

9. Speisevorrichtung nach Anspruch 7 oder 8, dadurch gekennzeichnet, dass die Koppelelemente (73 oder 76) Serien-Widerstände sind und die Elemente (74) Transformatoren des Verhältnisses zwei sind.

10. Verwendung einer Speiservorrichtung nach einem der Ansprüche 1 bis 9 in einem VOR-Doppler-System.

## Claims

1. Feeding device of a radio navigational system of the VOR Doppler type particularly composed of a circular network of $N_o$ antennas (1 to 48) emitting the two lateral bands, with $(\omega+\Omega)$ and $(\omega-\Omega)$ pulsations respectively, of an amplitude modulation of a VHF carrier wave with a pulsation $\omega$, comprising:

— means generating the lateral bands, constituted for each one by a generator (56; 57) and two amplifiers-modulators (58 and 59; 60 and 61) modulating the generator signal in amplitude (56; 57) by a periodical tension F(t) and respectively delivering the signals ($S_1$ and $S_2$; $S_3$ and $S_4$), and
— a commuting device ($65_1$ to $65_4$) of the $N_o$ antennas (1 to 48) of the circular network emitting the lateral bands, caracterized in which it additionally comprises for each of the lateral bands:
— two collecting means (14 and 15; 16 and 17) of a part of the respective signals ($S_1$ and $S_2$; $S_3$ and $S_4$) issued from the two amplifiers-modulators (58 and 59; 60 and 61); and
— means of adding the signals ($S_1$ and $S_2$) and ($S_3$ and $S_4$) respectively corresponding to the lateral band with a respective pulsation $(\omega+\Omega)$; $(\omega-\Omega)$, producing a feeding signal of the determined spectrum antennas and compensating the existing couplings between these antennas.

2. Feeding device according to claim 1, caracterized in which the collecting means of one part of the signals ($S_1$ to $S_4$) and the addition means ($63_i$) of the amplitude modulated lateral bands are placed before the commuting device ($65_i$) of the antennas.

3. Feeding device according to claim 1, caracterized in which the collecting means (73, 76) and the addition means of the amplitude modulated lateral bands are placed between the commuting device (70—71) and the $N_o$ antennas of the circular network.

4. Feeding device according to claim 1 or 2, caracterized in which for each of the two lateral bands with respective pulsation $(\omega+\Omega)$ and $(\omega-\Omega)$:

— the collecting means are constituted by two couplers (14 and 15; 16 and 17), and
— the means of adding the signals ($62_1$ and $62_2$; $62_3$ and $62_4$) each connected to one of the two amplifiers-modulators and collecting one out of two periods of the signals ($S_1$ and $S_2$; $S_3$ and $S_4$) respectively and delivering four signals ($S_5$ to $S_8$; $S_9$ to $S_{10}$) and by four adders ($63_1$ to $63_4$; $63_5$ to $63_8$) each comprising two inputs, a first input connected to an output of one of the two commutators and a second input connected to the coupler connected to the other commutator, the adders output signals corresponding to the local lateral bands which supply the commutation device (65$_i$) of the N$_o$ antennas of the network.

5. Feeding device according to claim 1 or 2, caracterized in which for each of the two lateral bands with respective pulsations ($\omega+\Omega$) and ($\omega-\Omega$):

— the collecting means are constituted by four couplers (68$_1$ to 68$_4$; 68$_5$ to 68$_8$) and
— the adding means are constituted by the commutators (66$_1$ and 66$_2$; 66$_3$ and 66$_4$) each connected to one of the two amplifiers-modulators, collecting one out of three periods of the signals (S$_1$ and S$_2$; S$_3$ and S$_4$) respectively, and delivering six signals (S$_{21}$ to S$_{26}$; S$_{27}$ to S$_{32}$), and by six adders (67$_1$ to 67$_6$; 67$_7$ to 67$_{12}$) comprising each three inputs, a first input connected to an output of one of the two commutators, a second input connected to one of the couplers connected to this commutator and a third input connected to one of the couplers connected to the other commutator, the output signals of the adders corresponding to the two lateral bands which feed the commutation device (69$_i$) of the N$_o$ antennas of the network.

6. Feeding device according to claim 3, caracterized in which at the output of the commutation device (70, 71 Figure 6) connecting lines (72) and coupling elements (73) are placed interconnecting amonst them the successive rank of antennas of the circular network emitting the lateral bands of the amplitude modulation of the VHF carrier wave.

7. Feeding device according to claim 6, caracterized in which it comprises, between the connecting lines and each antenna, an element (74) optimizing the load impedance of the antennas taking into account the impedance brought by the lines (72) and the elements (73).

8. Feeding device according to claim 7, caracterized in which the connecting lines (75) and the supplementary coupling elements (76) connect between them the antennas of rank differing of two units.

9. Feeding device according to claim 7 or 8, caracterized in which the coupling elements (73 and 76) are series resistances and the elements (74) are transformers with transformation ratios of 2.

10. Use of a feeding device according to one of claims 1 to 9, in a VOR Doppler system.

FIG_1

FIG_2

FIG_3

FIG_4

FIG_5

# FIG_6